# EUROPEAN PATENT SPECIFICATION

(11) **EP 1 009 622 B1**
(45) Date of publication and mention of the grant of the patent: **02.01.2003**
(21) Application number: 98921945.6
(22) Date of filing: 28.04.1998
(51) Int. Cl.: B29C 70/44, B29D 22/00

(54) **METHOD FOR THE MOULDING OF HOLLOW BODIES WHICH COMPRISE AT LEAST ONE LAYER OF REINFORCED PLASTIC**
VERFAHREN ZUM FORMEN VON HOHLEN KÖRPERN, DIE MINDESTENS EINE SCHICHT AUS VERSTÄRKTEM KUNSTSTOFF AUFWEISEN
PROCEDE DE FORMAGE DE CORPS CREUX COMPRENANT AU MOINS UNE COUCHE DE PLASTIQUE RENFORCE

(30) Priority: 12.05.1997 SE 9701763
(43) Date of publication of application: 21.06.2000
(73) Proprietor: Volvo Personvagnar AB, 405 08 Göteborg (SE)
(72) Inventor: WESTERLUND, Gunnar, S-442 33 Kungälv (SE)
(74) Representative: Romare, Laila Anette
(86) International application number: SE9800768
(87) International publication number: WO98051480

(56) References cited:
- EP-A- 0 659 541
- US-A- 3 610 563
- US-A- 4 622 086
- US-A- 4 840 826
- US-A- 5 080 850
- US-A- 5 534 318

## Description

### TECHNICAL FIELD:

The present invention can be implemented in connection with the moulding of hollow plastic components which comprise layers of reinforced plastic. The plastic components in question are referred to, in accordance with the invention, by the expression hollow bodies.

The invention relates to a method for the moulding of hollow bodies which comprise at least one layer of reinforced plastic.

The invention can be applied within many different areas where there is a need for hollow bodies which comprise reinforced plastic, for example within the area of the manufacture of vehicle components made of reinforced plastic.

### TECHNICAL BACKGROUND:

There are at present a number of different manufacturing processes for reinforced plastic components. One such previously disclosed process is the so-called pressure bag method, which is used in the manufacture of hollow reinforced plastic components in large batches and involves placing reinforcement material in the form of cut-out bits of fabric, netting, SMC or preformed glass-fibre reinforce-ment in a two-part mould. A pressure bag or the like made of a soft, flexible material is placed inside the mould, within the reinforcement material, after which the mould halves are closed. Matrix material in the form of hardening-initiated polyester resin is then injected into the mould in order to impregnate the reinforcement material, the pressure bag being subjected to a pressure of the order of 0.5 - 1 MPa. In this way the reinforcement material, which is now impregnated with hardening material, is pressed against the inside of the mould with good contact. After the matrix material has hardened sufficiently, the mould halves are opened and the hollow body of glass-fibre-reinforced polyester plastic is removed. An example of this process is disclosed in US 3610563.

A modified variant of the pressure bag method is used in the manufacture of elongate hollow bodies such as masts and flagpoles. Here, the reinforcement material is cut up and placed on a foil which will serve both as an external mould and as a release layer. A bladder of soft and flexible material is placed on top of the reinforcement material, which bladder, in the inflated state, will have approximately the internal dimensions of the finished product. The bladder is then subjected to a low pressure, at the same time as the reinforcement material is folded round the inflated bladder and is fixed in this position. It can be fixed with the aid of clamping rulers or the like. Polymerization-initiated ester resin with hardener, or other similar matrix material, is then poured into the mould which is formed between the folded-round foil on the outside and the inflated bladder on the inside, the reinforcement material being impregnated with the matrix material. The mould is kept in this state until the matrix material has hardened sufficiently to allow mould release.

Another known manufacturing process for components made of reinforced plastic involves using a core of expanding thermoplastic. This process is mainly suitable for the manufacture of smaller components such as guitar necks and canoe paddles. In this process, reinforcement material is placed in a two-part mould, after which a core of hot-expanding thermoplastic is placed inside the reinforcement material, the mould halves are pressed together and at the same time are heated, the thermoplastic expanding and filling out the cavity inside the mould at the same time as the melted thermoplastic impregnates the reinforcement material. After cooling, a plastic component is obtained having a core of expanded thermoplastic with reinforcement material enclosed in the matrix material on the surfaces of the component.

In another previously disclosed manufacturing process, hollow bodies can be manufactured by thermoforming using solid cores which can either be removed or can remain as a permanent part of the finished plastic component. This process can also be used for manufacturing components made of reinforced plastic, in which case the reinforcement material is added to the core in the form of a finish-woven stocking which is passed over the core or in the form of cut-up bits of reinforcement material which are draped around the core. Various types of polyurethane cellular plastic are the most commonly used material for these permanent cores. As regards the removable cores, possible materials are wax, paraffin, sand with binder, and metal alloys with low melting point.

A further previously disclosed manufacturing process for simpler hollow bodies of reinforced plastic is so-called winding. In this process, blow-moulded, rigid hollow bodies can be used as a permanent core, and resin-impregnated reinforcement material in the form of so-called roving is wound around the core in a defined pattern and is there- after hardened.

In the manufacture of shafts for golf clubs, for example, so-called profile extrusion or pultrusion is used. This process gives a strong, longitudinally oriented material as regards the reinforcement fibres or filaments. In order to obtain improved material properties, this process can be combined with winding, of the type described above.

A still further manufacturing process for the manufacture of hollow articles is disclosed in US 5080850 where at a first process stage a preformed collapsible hollow core having circumferentially variable wall thickness is produced. In a second process step fibres are wound around the core. In order to withstand the pressure from winding, the core may be pressurized during winding.

The previously disclosed manufacturing processes for the manufacture of hollow bodies of reinforced plastic may be found to have certain disadvantages.

In manufacturing processes which use an inflatable tubing, a bladder or a soft membrane as a core, the application of reinforcement material to the outside of the core may be found to be difficult, since the soft tubing or bladder does not provide any stable support when the reinforcement material is to be applied. In addition, a soft membrane of this kind does not have any defined shape in the non-pressurized state, i.e. when the reinforcement material is applied.

Processes which use cores made of expanding thermoplastic often yield expensive end products and, in applications where low weight is important, they can cause problems because of too great a weight of the end product compared to hollow bodies.

Solid cores of conventional type certainly provide an excellent support for application of reinforcement material, but they are relatively expensive. In addition, the pressure force which is needed to shape the reinforcement material is applied from outside, which can complicate the moulding tool design and the manufacturing process.

Processes which use solid cores can also cause problems in terms of the fact that the reinforcement material is not pressed in satisfactory contact with the internal walls of the moulding tool.

### DISCLOSURE OF THE INVENTION:

Thus, the first object of the present invention is to make available a method for the moulding of hollow bodies comprising at least one layer of reinforced plastic, which method eliminates the aforementioned difficulties involved in applying reinforcement material to soft pressure membranes according to the prior art.

This object of the invention is achieved by the method defined in appended claim 1.

Preferred embodiment of the method are defined in the dependent claims.

### DESCRIPTION OF THE FIGURES:

The invention will be described in greater detail hereinbelow with reference to the attached drawings, in which:
- Fig. 1: is a diagrammatic perspective view of a pressure membrane for use in implementing the invention,
- Fig. 2: is a diagrammatic illustration of a method according to the invention, showing the most important parts and stages,
- Fig. 3: is a diagrammatic cross-section of a hollow body produced according to the invention.

### PREFERRED EMBODIMENTS:

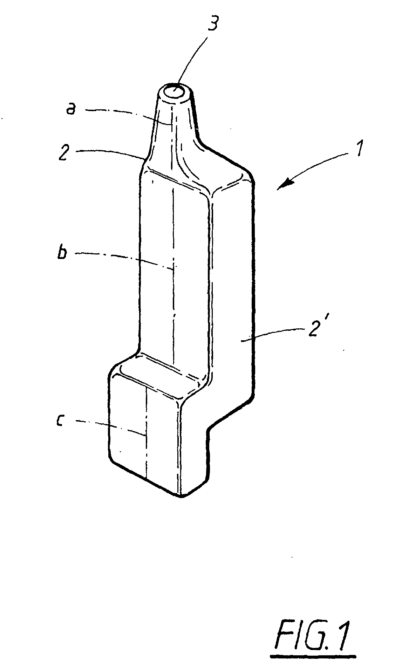

In a first preferred embodiment of the invention, a pressure membrane is used, as shown in Fig. 1, in the form of a preformed hollow core made of a stiff, thin-walled but nevertheless stretchable material.

A self-supporting pressure membrane 1 of this type can be manufactured by any suitable manufacturing method familiar to those skilled in the art for the manufacture of hollow plastic components, for example by blow-moulding or compression moulding.

The walls 2, 2' of the pressure membrane 1 can consist of a number of different plastic materials, as long as the wall material can be formed into a hollow, thin-walled core of the desired shape, and as long as the material used is able to provide both sufficient stiffness and stretchability/elasticity for the application, and the wall material is able to provide the properties which are needed for pressurizing the pressure membrane.

In the first embodiment of the invention, the walls 2, 2' of the pressure membrane 1 consist of a thermoplastic polyester material which has been blow-moulded to a desired and essentially hollow shape and to the desired dimensions.

According to the invention, the pressure membrane 1 is provided with at least one suitably configured opening or the like, i.e. a pressurizing attachment 3, for connection to a pressurizing means.

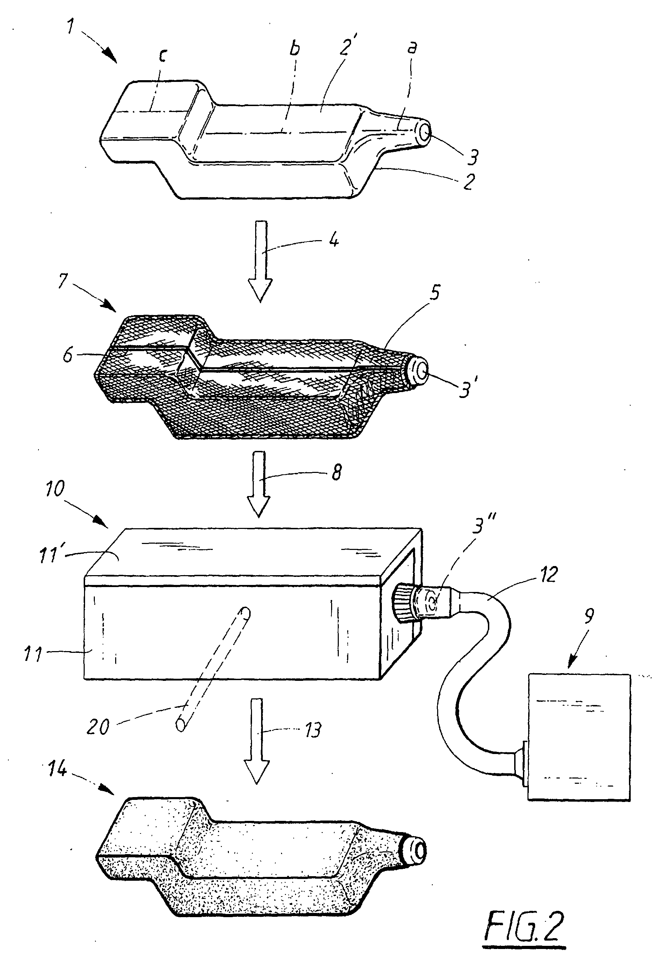

Figure 2 is a diagrammatic illustration of an arrangement and a method according to the invention. The most important stages in a first preferred embodiment of a method according to the invention will be described below, simultaneous with the description of a first preferred embodiment of an arrangement according to the invention.

According to the first preferred embodiment of the invention, a material charge 5 consisting of a woven textile material with 50% by weight of glass fibres as reinforcement fibres, and a matrix material in the form of 50% by weight of polyester fibres, is applied 4 to the outside of the pressure membrane 1. Although this is true of the embodiment described, the composition of the material charge can be varied in many different ways, as will be described hereinafter.

In the first embodiment, the material charge 5, with both reinforcement material and matrix material, is in the form of a textile material web which is applied 4 to the pressure membrane 1. This takes place, in the described embodiment, by means of the material charge 5 being draped around the pressure membrane 1 and then being fixed, for example with a tape 6 of the thermoplastic type.

By virtue of the fact that the pressure membrane 1 is already self-supporting in a non-pressurized state, it constitutes a reliable support for application 4 of the material charge 5.

The self-supporting pressure membrane 7 covered with the material charge is then placed 8 in a two-part moulding tool which is in an open position (not shown), after which the pressurizing attachment 3', 3'' of the pressure membrane is connected to a pressurizing means 9 which, in the described embodiment, is a compressed-air compressor.

After this, the halves 11, 11' of the moulding tool 10 are closed around the pressure membrane 7 with its surrounding material charge.

The self-supporting pressure membrane is then subjected to pressure with the aid of a pressurizing medium 12 which, in the described embodiment, is compressed air from the compressor 9. The result of this is that the elastic wall material of the self-supporting pressure membrane 1 is stretched out and thereby presses the outer material charge 5 against the internal walls of the closed moulding tool 10. The walls of the moulding tool 10 are in this case heated to a temperature which exceeds the softening temperature of the thermoplastic matrix fibres, in the described embodiment approximately 220°C, as a consequence of which the thermoplastic matrix material softens or partially melts, and a consolidation and forming of the material charge is achieved. The pressure inside the pressure membrane 1 is increased, in the described embodiment, to approximately 5 bar, but it can be adapted on the basis of what the application requires and on the basis of the result of thermoforming trials.

After moulding has taken place, the moulding tool 10 is cooled to a temperature close to room temperature, the internal pressure of the pressure membrane is let down, and the attachment 3' ' to the pressurizing means 9 is detached. After the two-part moulding tool 10 has been opened, the hollow body of reinforced plastic can be removed 13.

In an alternative method, the material charge is already heated before material charge and pressure membrane are placed in the moulding tool, instead of heating taking place inside the moulding tool.

According to a first preferred embodiment of the invention, the finished hollow body 14 has a specific structure in which the self-supporting pressure membrane constitutes an integral part.

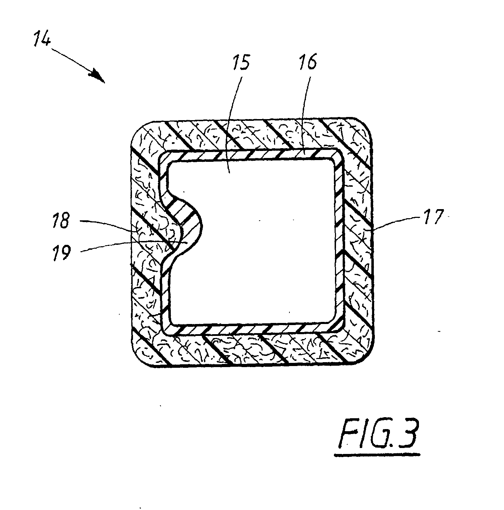

Figure 3 shows a diagrammatic cross-section of a hollow body 14 produced according to the invention.

In the first preferred embodiment, the walls of the hollow body 14, counting from inside the internal cavity 15, consist of a first layer 16 of thermoplastic material originating from the preformed, self-supporting pressure membrane. Outside the first layer there then follows a second layer 17, originating from the textile material charge, this second layer 17 comprising reinforcement material in the form of glass fibres and matrix material in the form of polyester fibres. During moulding, the thermoplastic polyester fibres have at least partially melted and, in the finished hollow body, they function essentially as a binder for the reinforcement fibres. The thermoplastic matrix fibres in the second layer 17 additionally give a certain degree of adhesion to the first layer 16 through thermal bonds.

By using the preformed, self-supporting pressure membrane in the method according to the invention, it is possible to manufacture a hollow body of reinforced plastic having a greater thickness in a desired area of the wall of the hollow body 14. One such area 18 is shown in the attached Figure 3. This area 18 has been obtained by means of the fact that the self-supporting pressure membrane, during its preforming, has been configured with an inward curve 19 at the location where greater material thickness is wanted in the finished hollow body 14. By means of a suitably adapted pressure inside the pressure membrane during the moulding of the hollow body 14, the inward curve 19 in the pressure membrane will remain in place during the moulding process, the consequence of which is that more reinforcement material and matrix material gathers at this location. This provides a greater local material thickness in this wall area 18 of the finished hollow body 14.

In cases where greater material thickness is desired locally, an alternative method, for example, would be to apply double layers of material charge in the area 18 prior to moulding.

According to a second preferred embodiment of the invention, described with reference to Figure 2, a material charge 5 is applied in a first stage to the outside of a self-supporting pressure membrane 1, in a similar manner to that of the first embodiment.

In the second embodiment, the material charge 5 consists exclusively of reinforcement material, in this case glass fibres in the form of a fabric which is draped round and fixed 4 to the self-supporting pressure membrane 1 in a suitable way. In the second embodiment too, this is done by means of the material charge 5 being draped round the pressure membrane 1 and fixed using a suitable means 6, for example a tape.

The self-supporting membrane 7, with its surrounding material charge 5, is then placed in a two-part moulding tool which is in an open position (not shown), after which the pressure membrane is attached to a pressurizing means 9 which, in the described embodiment, is a compressed-air compressor.

After this, the halves 11, 11' of the moulding tool 10 are closed around the self-supporting pressure membrane 7, with the material charge 5 applied thereto, and a thermosetting plastic, in this case a polyester resin, is injected into the moulding tool 10 by way of an injection member 20 adapted for this purpose (indicated by broken lines) in order to impregnate the material charge 5 consisting of reinforcement material. In the described embodiment, the hardening of the thermosetting plastic is already initiated when it is injected into the moulding tool 10.

The self-supporting pressure membrane is then subjected to pressure, in the same way as in the first embodiment, with the aid of compressed air from a compressor 9, the result of which is that the walls of the pressure membrane are stretched out and thereby press the outer material charge 5 against the internal walls of the moulding tool 10 for moulding. By heating the internal walls of the moulding tool 10, consolidation and hardening can be accelerated if necessary.

After the thermosetting plastic, in this case polyester, has hardened sufficiently, the pressure in the pressure membrane is reduced and the attachment 3' to the pressurizing means 9 is disconnected. After the moulding tool 10 has been opened, the hollow body 14 can be removed from the moulding tool.

In this second embodiment too, the finished hollow body according to the invention has a specific structure in which the self-supporting pressure membrane constitutes an integral part.

As has already been mentioned, Figure 3 shows a diagrammatic cross-section through a hollow body 14 produced according to the invention. In the second preferred embodiment, the hollow body 14 consists, starting from the inside and working outwards, of a first layer 16 of thermoplastic material originating from the preformed, self-supporting pressure membrane, outside which there follows a second layer 17, originating from the material charge, this second layer 17, in the described embodiment, comprising reinforcecement material in the form of glass fibres and hardened polyester resin as matrix material which essentially functions as a binder for the reinforcement fibres and gives at least a certain degree of adhesion to the first layer 16.

In the same way as in the first embodiment, the hollow body 14 produced according to the second embodiment can be provided with a wall area 18 of greater local material thickness.

The invention has been described above with reference to the attached figures and on the basis of preferred embodiments. It must be understood that the invention is not in any way limited by these examples, and that instead its scope is defined by the attached patent claims.

Thus, under certain circumstances, for example when the lowest possible weight is required, and the shape of the hollow body so permits, it is possible for the pressure membrane to be removed from the finished hollow body.

Since the pressure membrane used in the invention can be given a shape which well matches the internal dimensions of a hollow body that is to be moulded in a moulding tool, a number of advantages are afforded. Among these advantages, improved monitoring, and also control, of the thickness of an onlying material charge is achieved by adapting the shape and the dimensions of the pressure membrane in relation to the shape and the dimensions of the internal cavity in a moulding tool, in relation to the thickness of the material charge, and in relation to the desired material thickness of the finished hollow body.

In the case where the pressure membrane is intended to constitute an integral part of a finished hollow body and does not need to be removed, there are no great restrictions as regards the shape of the preformed pressure membrane. The shape of the pressure membrane can in this case be based on the shape of the hollow body that is to be manufactured, and can also be adapted to the internal dimensions of the moulding tool so that the external dimensions of the pressure- membrane are slightly smaller than the internal dimensions of the internal cavity of the moulding tool, depending on the desired material thickness and desired local moulding pressure.

The pressure membrane used in the invention differs from previously used pressure membranes in a number of ways which have already been explained.

One such fundamental difference, compared with the known prior art, is that even in the non-pressurized state the pressure membrane has a shape which essentially coincides with the hollow body that is to be formed. This can also be expressed by saying that the imagined centre axes of gravity of the pressure membrane, in the non-pressurized state, essentially coincide with corresponding imagined centre axes of gravity of the internal cavity of the moulding tool which is to be used, when the moulding tool is in the closed position.

In Figures 1 and 2, these imagined longitudinal centre axes of gravity of the pressure membrane have been designated with the reference labels a, band c.

A typical feature of the pressure membrane used in implementing the invention is that, in the manufacture of reinforced plastic components of complicated shape, the imagined longitudinal centre axes of gravity in different areas of the pressure membrane substantially coincide with one another, both when the pressure membrane is in a non-pressurized state and in a pressurized state, and that the imagined continuations of the imagined longitudinal centre axes of gravity, both when the pressure membrane is in a non-pressurized state and in a pressurized state, run parallel with one another or cross one another.

Polyester is the most preferred plastic material for use as the wall material of the pressure membrane, although it is also conceivable to use other suitable polymers such as polypropylene, polyamide or softened polystyrene.

Hot-blowing according to the prior art is advantageously used for forming the self-supporting pressure membrane for use in the present invention, although other known manufacturing processes, such as thermoforming, can also be used.

In cases where extra stabilization of the pressure membrane is desired for some reason, the cavity within the pressure membrane can be filled with sand or other powdery material, which can be removed after the forming process has been completed.

The material for the walls of the pressure membrane must be chosen so that the walls are essentially impenetrable to the pressurizing medium which is to be used in implementing the invention. Possible pressurizing media include various aqueous or hydrocarbon-containing liquids, air, nitrogen or water vapour, although other pressurizing media are also conceivable. Thus, both pneumatics and hydraulics can be used for applying pressure. The pressure can be chosen in accordance with the application and the materials involved.

The thickness of the walls of the pressure membrane and the choice of material are fairly flexible but must nevertheless be adapted so that the pressure membrane provides a stable support for application of a material charge thereon, but so that the walls are at the same time sufficiently elastic to be able to press an outer material charge into good contact against a surrounding moulding tool. In addition, as has already been mentioned, the wall material must be essentially impenetrable to the pressurizing medium which is used. In the case where the pressure membrane is to be removed from a finished hollow body, the walls of the pressure membrane are expediently provided with a release layer or the like.

The reinforcement material included in the material charge does not of course need to be provided in the form of a woven fabric, but can instead be provided in many different forms, for example in the form of roving, in the form of a nonwoven material or in the form of individual reinforcement fibres. Different types of reinforcements which have been preformed, for example by blowing or injecting reinforcement fibres on preforming screens or the like, can also be used.

The reinforcement material need not necessarily consist of glass fibre but can instead consist of any suitable fibre which has sufficiently great adhesion to the matrix material that is used, and which is able to confer the desired properties on the finished hollow body. Carbon fibres are an example of one such possible reinforcement fibre.

The reinforcement fibres can be either discontinuous with a defined length or can comprise continuous filaments. The diameter of the fibres or filaments can vary within a large range, from microfibres having a fibre diameter of less than 1 µm, to extremely coarse fibres having diameters of several 100 µm. The fibre dimensions can thus vary within a very large range depending on the application.

In addition to various synthetic reinforcement fibres or mineral fibres, such as glass fibres or carbon fibres, it is also possible to conceive using natural fibres, such as flax or ramie. Mixtures of different reinforcement fibres can also be used in the material charge. The content of reinforcement material in the material charge advantageously lies between 25 and 60% by weight.

For the purpose of increasing the adhesion to the matrix material which is used, the reinforcement fibres or the reinforcement material can be exposed to different chemical or physical treatment methods. Examples of such methods are oxidation with chemical oxidizing agents, corona treatment or plasma treatment.

The application of a material charge or of a reinforcement material need not be carried out by manually draping and fixing a woven fabric or a nonwoven sheet round the preformed and self-supporting pressure membrane, but can instead also be done by winding a roving of reinforcement material or a woven fabric of reinforcement material round the pressure membrane, by braiding the reinforcement material round the pressure membrane, or by blowing or injecting individual reinforcement fibres onto the pressure membrane and fixing these thereon with a suitable binder.

The material charge is advantageously applied in such a way that, for example, the fibre orientation and material thickness of the reinforcement material is controlled so that the load-bearing capacity of the reinforcement material can be utilized optimally in the finished hollow body.

The application of a material charge, on a pressure membrane included in the arrangement according to the invention, can advantageously be automated, for example such that a woven, knitted or braided continuous stocking is mechanically engaged over the pressure membrane and cut off in the appropriate length, or by means of reinforcement fibres with a suitable binder being injected onto the preformed, self-supporting pressure membrane. In the case of the injection of reinforcement fibres with a binder, the binder is advantageously also matrix material, for example a hardening-initiated polyester resin.

The matrix material included in the material charge can, in the case of thermoplastic matrix material, be chosen from a large number of thermoplastic polymers, as long as their softening point lies at a suitable level.

Suitable level means that the softening point (melt point) should lie at a sufficiently high level to satisfy the heat resistance requirements placed on the finished hollow body, and at the same time at a sufficiently low level to ensure realistic softening/ melting in an efficient process. Examples of polymers which may satisfy these requirements and which also entail a realistic price are thermoplastic polyester and polypropylene, but there are many other possible polymers suitable for use as matrix material in implementing the invention.

In embodiments of the invention which use the injection of hardenable or polymerizable resin and the like, there are a large number of chemical compounds which can be used as matrix material. Examples of such thermosetting plastics are polyester and vinyl ester. In applications of the invention in which thermosetting plastics are used, apart from additions of polymerization initiators, accelerators and hardeners, it is also possible to provide other additions, for example pigments or UV stabilizers. Such addition is preferably carried out before the hardenable matrix material is added to the reinforcement material, although it can also take place inside the moulding tool.

## Claims

1. Method for the moulding of hollow bodies which comprise at least one layer of reinforced plastic, comprising the use of a two-part mould (10) with mould halves (11, 11'), a material charge (5) comprising reinforcement material, a pressure membrane (1), and a pressurizing means (9), wherein the pressure membrane (1) is preformed and self-supporting in a non-pressurized state and consists of a stiff, thin but nevertheless stretchable wall material which forms an internal cavity, wherein the material charge (5) is applied (4) to the said pressure membrane (1), after which the internal walls of the moulding tool (10) are brought (8) into a moulding position surrounding the said pressure membrane (7) with the material charge (5) applied thereon, an internal pressure being created inside the said pressure membrane with the aid of the said pressurizing means (9), and wherein the pressure membrane is stretched outwards by virtue of the internal pressure and thereby presses the applied material charge (5) in good contact against the internal surfaces of the moulding tool (10).

2. Method according to Patent Claim 1, **characterized in that** the material charge (5) comprises both reinforcement material and a thermoplastic matrix material, and **in that** the internal surfaces of the moulding tool (10) are heated to a temperature which exceeds the softening temperature of the matrix material at the same time as the pressure membrane is under an internal pressure.

3. Method according to Patent Claim 1, **characterized in that** the material charge (5), before insertion into the moulding tool (10), is heated to a temperature which exceeds the softening temperature of the matrix material.

4. Method according to Patent Claim 1, **characterized in that** the material charge (5) comprises a reinforcement material, and **in that** hardenable matrix material is added to the reinforcement material after the said reinforcement material has been applied to the pressure membrane.

5. Method according to any of Patent Claims 1 to 4, **characterized in that** the material charge (5) comprises a woven, braided or knit textile material, preferably with continuous fibres.

6. Method according to any of Patent Claims 1 to 5, **characterized in that**, in a non-pressurized state, imagined longitudinal centre axes of gravity (a, b, c) in different areas of the pressure membrane (1) substantially coincide with corresponding imagined centre axes of gravity in a finished hollow body (14).

7. Method according to any of Patent Claims 1 to 6, **characterized in that** the pressure membrane (1) is filled with a powdery or granular material before application of the material charge, and **in that** the said powdery or granular material is removed from a finished hollow body (14).

8. Method according to any of Patent Claims 1 to 7, **characterized in that** the pressure membrane is left in place as an integral part of the finished hollow body (14).

9. Method according to any of Patent Claims 1 to 8, **characterized in that** the pressure membrane is removed from the finished hollow body (14).

## Patentansprüche

1. Verfahren zum Formen von hohlen Körpern, die wenigstens eine Schicht aus verstärktem Kunststoff aufweisen, bei dem eine zweiteilige Form (10) mit Formhälften (11, 11'), eine Materialbeschichtung (2) mit Verstärkungsmaterial, eine Druckmembran (1) und eine Druckeinrichtung (9) verwendet wird, wobei die Druckmembran (1) im nichtdruckbeaufschlagten Zustand vorgeformt und selbsttragend ist und aus einem steifen, dünnen, jedoch gleichwohl dehnbaren Wandmaterial besteht, das einen internen Hohlraum bildet, wobei die Materialbeschichtung (5) auf die Druckmembran (1) aufgebracht (4) wird, wonach die internen Wände des Formwerkzeugs (10) in eine Formstellung gebracht (8) werden, in der sie die Druckmembran (7) mit der darauf aufgebrachten Materialbeschichtung (5) umgeben, wobei ein Innendruck im Inneren der Druckmembran mit Hilfe der Druckeinrichtung (9) erzeugt wird, und wobei die Druckmembran nach außen durch den Innendruck gedehnt wird und dadurch die aufgebrachte Materialbeschichtung (5) in guten Kontakt gegen die Innenflächen des Formwerkzeugs (10) drückt.

2. Verfahren nach Anspruch 1, **dadurch gekennzeichnet, dass** die Materialbeschichtung (5) sowohl Verstärkungsmaterial als auch ein thermoplastisches Matrixmaterial aufweist, und dass die Innenflächen des Formwerkzeugs (10) auf eine die Erweichungstemperatur des Matrixmaterials übersteigende Temperatur zur selben Zeit erhitzt werden, wenn sich die Druckmembran unter Innendruck befindet.

3. Verfahren nach Anspruch 1, **dadurch gekennzeichnet, dass** die Materialbeschichtung (5) vor dem Einführen in das Formwerkzeug (10) auf eine Temperatur erhitzt wird, die die Erweichungstemperatur des Matrixmaterials übersteigt.

4. Verfahren nach Anspruch 1, **dadurch gekennzeichnet, dass** das Beschichtungsmaterial (5) ein Verstärkungsmaterial aufweist und dass ein härtbares Matrixmaterial zu dem Verstärkungsmaterial hinzugefügt wird, nachdem das Verstärkungsmaterial auf die Druckmembran aufgebracht worden ist.

5. Verfahren nach einem der Ansprüche 1 bis 4, **dadurch gekennzeichnet, dass** die Materialbeschichtung (5) ein gewebtes, geflochtenes oder gestricktes Textilmaterial, vorzugsweise mit kontinuierlichen Fasern, aufweist.

6. Verfahren nach einem der Ansprüche 1 bis 5, **dadurch gekennzeichnet, dass** in einem drucklosem Zustand imaginäre Längsachsen von Schwerpunkten (a, b, c) in verschiedenen Bereichen der Druckmembrane (1) im wesentlichen mit entsprechenden imaginären Achsen von Schwerpunkten in einem fertigen hohlen Körper (14) zusammenfallen.

7. Verfahren nach einem der Ansprüche 1 bis 6, **dadurch gekennzeichnet, dass** die Druckmembrane (1) mit einem pulverförmigen oder granularen Material vor dem Aufbringen der Materialbeschichtung gefüllt wird, und dass das pulverförmige oder granulare Material von einem fertiggestellten hohlen Körper (14) entfernt wird.

8. Verfahren nach einem der Ansprüche 1 bis 7, **dadurch gekennzeichnet, dass** die Druckmembran als integraler Bestandteil des fertigen Hohlkörpers (14) belassen wird.

9. Verfahren nach einem der Ansprüche 1 bis 8, **dadurch gekennzeichnet, dass** die Druckmembran von dem fertiggestellten hohlen Körper (14) entfernt wird.

## Revendications

1. Procédé de moulage de corps creux qui comportent au moins une couche de matière plastique armée, comprenant l'utilisation d'un moule en deux parties (10) ayant des moitiés (11, 11') de moule, une charge d'un matériau (5) constituant un matériau d'armature, une membrane (1) de pression et un dispositif (9) de pression, dans lequel la membrane de pression (1) est préformée et cohérente à l'état sans application de pression et est constituée d'un mince matériau rigide de paroi néanmoins extensible qui forme une cavité interne, dans lequel la charge (5) du matériau est appliquée (4) à la membrane de pression (1), puis les parois internes de l'outil de moulage (10) sont mises (8) en position de moulage autour de la membrane de pression (7) sur laquelle est appliquée la charge du matériau (5), une pression interne étant créée à l'intérieur de la membrane de pression à l'aide du dispositif de pression (9), et dans lequel la membrane de pression est étirée vers l'extérieur sous l'action de la pression interne et repousse ainsi la charge appliquée du matériau (5) en contact intime contre les surfaces internes de l'outil de moulage (10).

2. Procédé selon la revendication 1, **caractérisé en ce que** la charge du matériau (5) comprend à la fois le matériau d'armature et une matière thermoplastique de liant, et **en ce que** les surfaces internes de l'outil de moulage (10) sont chauffées à une température qui dépasse la température de ramollissement du matériau de liant en même temps que la membrane de pression est soumise à une pression interne.

3. Procédé selon la revendication 1, **caractérisé en ce que** la charge de matériau (5), avant insertion dans l'outil de moulage (10), est chauffée à une température qui dépasse la température de ramollissement du matériau de liant.

4. Procédé selon la revendication 1, **caractérisé en ce que** la charge de matériau (5) comporte un matériau d'armature, et **en ce qu'**un matériau de liant durcissable est ajouté au matériau d'armature après que le matériau d'armature a été appliqué à la membrane de pression.

5. Procédé selon l'une quelconque des revendications 1 à 4, **caractérisé en ce que** la charge du matériau (5) comporte un matériau textile plissé, tressé ou tricoté, ayant de préférence des fibres continues.

6. Procédé selon l'une quelconque des revendications 1 à 5, **caractérisé en ce que**, à l'état sans pression, des axes centraux longitudinaux imaginaires de gravité (a, b, c) dans des régions différentes de la membrane de pression (1) coïncident pratiquement avec des axes centraux imaginaires correspondants de gravité d'un corps creux terminé (14).

7. Procédé selon l'une quelconque des revendications 1 à 6, **caractérisé en ce que** la membrane de pression (1) est remplie d'un matériau granulaire ou en poudre avant application de la charge du matériau, et **en ce que** le matériau granulaire ou en poudre est retiré d'un corps creux terminé (14).

8. Procédé selon l'une quelconque des revendications 1 à 7, **caractérisé en ce que** la membrane de pression est laissée en position comme partie intégrée au corps creux terminé (14).

9. Procédé selon l'une quelconque des revendications 1 à 8, **caractérisé en ce que** la membrane de pression est retirée du corps creux terminé (14).
